# EUROPÄISCHE PATENTSCHRIFT

(11) **EP 0 393 409 B1**
(45) Veröffentlichungstag und Bekanntmachung des Hinweises auf die Patenterteilung: **09.11.1994**
(21) Anmeldenummer: 90106211.7
(22) Anmeldetag: 31.03.1990
(51) Int. Cl.: C08L 77/00

(54) **Formmassen aus unverträglichen Polymeren und ihre Verwendung**
Mouldings of incompatible polymers and their use
Masses à mouler en polymères incompatibles et leur utilisation

(30) Priorität: 10.04.1989 DE 3911695
(43) Veröffentlichungstag der Anmeldung: 24.10.1990
(73) Patentinhaber: EMS-INVENTA AG, 8001 Zürich (CH)
(72) Erfinder: Kerschbaumer, Franz, Dr.-rer.-nat., Dipl.-Chem., CH-7000 Chur (CH)

(56) Entgegenhaltungen:
- EP-A- 0 194 705
- EP-A- 0 235 876
- EP-A- 0 261 748
- DE-A- 3 212 344
- FR-A- 2 107 538
- US-A- 4 828 915

## Beschreibung

Die Erfindung betrifft Formkörper aus getrennt ausgebildeten und aus unterschiedlichen, zumindest teilweise unverträglichen Polymeren bestehenden selbständigen Körperteilen, die an einer oder mehreren begrenzten Berührungsflächen fest miteinander verbunden sind, wobei Filme und Laminate ausgeschlossen sind,
dadurch gekennzeichnet, dass die Polymeren
a) ein thermoplastisches Polymer,
b) ein damit zumindest teilweise unverträgliches thermoplastisches weiteres Polymer
sind, wobei a) und/oder b) in inniger kompatibler Mischung mit
c) 5 - 75 Gew.-% in Bezug auf diese Mischung eines durch einpolymerisierte oder aufgepfropfte Monomereinheiten mit Carboxyl- oder Säureanhydridgruppen funktionalisierten Olefinhomo- oder -copolymers
vorliegen und jedes der Polymeren bis zu 90 Gew.-% Zusatzstoffe enthalten kann, und ein verfahren zu ihrer Herstellung.

Polyamiden und Polyolefinen kommt eine grosse technische Bedeutung zu, wobei beide Produktgruppen Vorzüge und Nachteile aufweisen. Polyamide werden vor allem wegen ihrer hohen Steifigkeit und ihrer guten Beständigkeit gegenüber zahlreichen aggressiven Chemikalien eingesetzt, zeigen jedoch nur eine begrenzte Hydrolysebeständigkeit und eine begrenzte Barrierewirkung gegenüber der Permeation von Wasser. Ferner sind Polyamide nur in beschränktem Ausmasse flexibilisierbar, und zwar auch dann, wenn sie elastomermodifiziert sind.

Im Gegensatz zu Polyamiden lassen sich Polyolefine sehr gut flexibilisieren.

Es gibt thermoplastische Polyolefinblends und Copolymere, die zumindest einen olefinischen Baubestandteil aufweisen, die sogar eine so niedrige Shore A-Härte wie Gummi besitzen. Darüberhinaus besitzen Polyolefine eine ausgezeichnete Hydrolysebeständigkeit und Barrierewirkung gegen Wasserdampf.

Es gibt zahlreiche mechanische und elektrische Bauteile, die aus verschiedenen Funktionsteilen zusammengesetzt sind. Oft wird eine flexible Membran in ein starres Gehäuse integriert. Die Befestigung der Membran an das starre Gehäuse kann beispielsweise über Verschraubungen oder Verklebungen erfolgen. Derartige Methoden sind jedoch sehr zeitaufwendig.

Durch die Verbundspritzgiesstechnik mit verträglichen Polymeren, wie sie beispielsweise von R. Hagen in "Kunststoffe", 79, (1989), auf den Seiten 72 bis 76 beschrieben wird, können Teilstücke eines Formkörpers ohne Verklebung oder Verschraubung miteinander verbunden werden.

Soll das Verbundspritzgiessen jedoch mit zwei nichtkompatiblen Thermoplasten durchgeführt werden, ist die Haftung der Polymeren aneinander so schlecht, dass eine zusätzliche mechanische Verankerung notwendig wird. In diesem Fall sind auch die Verbindungsflächen gegenüber Flüssigkeiten und Gasen undicht.

Beim Verbundspritzgiessen und bei der Coextrusion kann nur dann eine befriedigende Haftung zwischen zwei Thermoplasten erzielt werden, wenn sie den gleichen, oder mindestens einen ähnlichen chemischen Aufbau aufweisen.

Werden zwei chemisch ähnliche Materialien zur gegenseitigen Haftung verspritzt oder coextrudiert, so wird nur dann eine Haftung erzielt, wenn der Thermoplast mit dem höheren Erweichungs- oder Schmelzpunkt aufgespritzt oder aufextrudiert wird. Im umgekehrten Fall ist die Verbundhaftung im allgemeinen ebenfalls schlecht.

Der Erfindung liegt die Aufgabe zugrunde, unter Behebung der vorstehend geschilderten Nachteile des Standes der Technik Formmassen zu schaffen, welche unterschiedliche, zumindest teilweise inkompatible Polymerkomponenten enthalten, die sich jedoch bei der Verformung, insbesondere durch Spritzgiessen und Coextrusion, gut miteinander verbinden lassen und Formkörper ergeben, die sich durch festhaftende und gegenüber Flüssigkeiten und Gasen absolut dichte Verbindung an ihren begrenzten Berührungsflächen auszeichnen.

Diese Aufgabe wird durch die Formkörper des Patentanspruches 1 und einem Verfahren zu ihrer Herstellung gemäss Anspruch 5 gelöst.

Die Erfindung beruht auf der überraschenden Feststellung, dass die an sich inkompatiblen Polymeren der Teilstücke der erfingungsgemässen Formkörper aufgrund der verträglichmachenden Wirkung des modifizierten bzw. funktionalisierten Polyolefins nach ihrem verbinden, insbesondere durch Anspritzen oder Anextrudieren, sehr gut aneinander haften.

Die Anwendung von sogenannten Verträglichmachern (Compatibilizern) ist für die Herstellung von mehrschichtigen Filmen, bei denen unterschiedliche Polymere als Schmelze gemeinsam durch eine Düse verformt werden, beispielsweise durch DE-A-32 12 344 oder US 4 828 915, oder für Laminate, die als feste Schichten miteinander verbunden werden, bekannt.

Für die erfindungsgemässen Formkörper, zu deren Herstellung eine Polymerschmelze an ein erstarrtes Teilstück an- oder aufgespritzt bzw. anextrudiert wird, ist die Verbundhaftung der selbständigen Köperteile an einer oder mehreren im Verhältnis zu ihrer Körperform begrenzten Berührungsflächen überraschend auch dann sehr gut, wenn das Polymer mit dem niedrigeren Erweichungs- oder Schmelzpunkt an dasjenige mit dem höheren Erweichungs- oder Schmelzpunkt angespritzt bzw. anextrudiert worden ist.

Die Grundvoraussetzung für die Eignung eines bestimmten Polymerpaars ist eine gute Haftung an den begrenzten Berührungsflächen zwischen den Teilstücken. Eine hohe Festigkeit des Haftverbundes kommt dadurch zustande, dass das angespritzte Polymer eine dünne Schicht des eingelegten Teilstückes aufschmilzt und die Schmelzen der beiden Materialien sich vermischen.

Dazu muss die Mischbarkeit der Polymeren selbstverständlich von vorneherein sichergestellt sein, bzw. deshalb versagt das Verfahren naturgemäss bei inkompatiblen Polymeren.

Für das erfindungsgemässe Verfahren wird normalerweise ein Polymer in einer herkömmlichen Spritzgiessform an ein dort eingelegtes erstarrtes Teilstück aus einem anderen an sich inkompatiblen Polymeren angespritzt, wobei wenigstens eines der beiden Polymeren innig mit dem funktionalisierten Olefinhomo- oder -copolymeren gemischt ist. Auf diese Weise erhält man Formkörper, deren Funktionen durch geeignete Polymerkombinationen den anwendungsspezifischen Anforderungen optimal angepasst werden können. Beispielsweise ist es mit dem Verfahren möglich, die Elastizität in einem gegebenen Formkörper auf die Bereiche zu beschränken, wo sie tatsächlich von Vorteil ist und den Rest des Formkörpers starr zu halten. Das Verfahren bietet darüberhinaus erhebliche Vorteile bei der farblichen Gestaltung von solchen Formkörpern.

Die Erfindung ermöglicht daher die Schaffung von Formkörpern mit Teilstücken, welche zumindest teilweise nichtkompatible Polymerkomponenten enthalten, die in den Formkörpern an fest begrenzten Berührungsflächen miteinander verbunden sind, ohne dass dabei Lösungsmittel oder Klebstoffe verwendet werden müssen. Insbesondere ermöglicht die Erfindung eine ausgezeichnete Verbundhaftung von mit Polyolefinen, Copolymeren oder deren Blends unverträglichen anderen thermoplastischen Polymeren, wie insbesondere Polyamiden, Copolyamiden oder deren Blends.

Die Erfindung betrifft insbesondere Formkörper mit Teilstücken aus a) polyolefinmodifizierten Polyamiden, Copolyamiden oder deren Blends mit b) Polyolefinen, Copolyolefinen und deren Blends, bzw. b) polyolefinmodifizierten Polyolefinen, Copolyolefinen oder deren Blends mit a) Polyamiden, Copolyolefinen oder deren Blends.

Durch die Erfindung ist es nunmehr möglich, integrierte Funktionsteile, beispielsweise ein starres Gehäuse mit flexibler Membrane oder Dichtlippe aus einer starren und einer sehr flexiblen thermoplastischen Polymerkomponente, durch Anspritzen oder Anextrudieren herzustellen, auch wenn die Polymeren unverträglich oder teilweise unverträglich sind. Zum Beispiel kann das modifizierte Polyamid in einem begrenzten Bereich, also nicht ganzflächig, an ein Polyolefin oder umgekehrt angespritzt werden, zu einem aus zwei an sich unverträglichen Materialien bestehenden Formkörper, die nur an den genannten Berührungsflächen fest miteinander verbunden sind, sonst aber getrennte, selbständige Körperteile bilden. Konkrete Anwendungen der erfindunggemässen Formkörper sind die Herstellung von beispielsweise Lichtschaltern mit flexibler Membranabdeckung und Elektrostecker mit flexibler wasserdichter Dichtlippe.

Ein weiteres Beispiel wäre ein Brillengestell, dessen Nasensteg und dessen Bügelenden aus einem elastischen Polyolefin und dessen Glaseinfassungen und dessen Bügelstege aus steifem Polyamid geformt sind.

Neben den Polyamiden und Polyolefinen, die als nichtverträgliche Komponenten in den erfindungsgemässen Formkörper eingesetzt werden, können diese auch aus anderen nichtverträglichen Polymerkomponenten bestehen oder diese zusätzlich enthalten, wie Polyester, polymere fluorierte Kohlenwasserstoffe, wobei natürlich auch die Copolymeren oder Blends davon in Frage kommen. Auch Polyoxymethylene und Acetale sowie Copolymere und Blends davon kommen in Frage.

In den erfindungsgemässen Formkörpern können die Komponenten a) und/oder b) Zusatzstoffe, insbesondere in Mengen bis zu 90 Gew.-%, enthalten, die sich selbstverständlich immer auf 100 % ergänzen.

Als derartige Zusatzstoffe, die, falls Polyamide vorliegen, vorzugsweise diesen zugesetzt werden, seien Weichmacher, Schlagzähmodifikatoren, elastomere Polyamide, Verarbeitungshilfsmittel, Hitze- und UV-Stabilisatoren, Flammschutzmittel und Pigmente erwähnt. Ferner können diese Komponenten Verstärkungsmittel enthalten, wie Glasfasern, Glaskugeln, Mineralfüllstoffe oder Kohlefasern.

Als Polyamide werden vorzugweise handelsübliche Typen eingesetzt, wie Polyamid 6, Polyamid 6/6, Polyamid 12, Polyamid 11, Polyamid 6/12, Polyamid 6/9, Polyamid 6/10 und Polyamid 12/12 oder Mischungen oder Blends davon.

Als Polyolefine werden vorzugsweise handelsübliche Typen eingesetzt, wie Polyethylene oder Polyproylene.

Die funktionalisierten bzw. modifizierten Polyolefine c) bestehen vorzugsweise aus funktionalisierten Olefinhomo-und/oder -copolymeren, insbesondere Olefinhomopolymeren aus Olefinen mit 2 bis 8 Kohlenstoffatomen und Olefincopolymeren aus 2 oder mehreren der genannten Monomeren, insbesondere aus Ethylen und Olefinen mit 3 bis 8 Kohlenstoffatomen, insbesondere α-Olefinen, vorzugsweise Ethylen und Propylen. Sie bilden Anteile von 5 bis 75 Gew.-%, bevorzugt 25 bis 50 Gew.-% am Gemisch mit dem thermoplastischen Polymer und den Additiven, falls diese vorhanden sind.

Die funktionalisierten Gruppen bestehen vorzugsweise aus solchen, die beispielsweise mit Hydroxyl- oder Aminogruppen zu reagieren vermögen und sind demgemäss vorzugsweise sauer wirkende Gruppen, wie Carboxylgruppen oder Säureanhydridgruppen, welche auf die Olefinhomo- oder -copolymeren aufgepfropft sind und/oder in diesen als Kettenglieder enthalten sind. Vorzugsweise enthalten die Olefinhomo- oder copolymeren einpolymerisierte und/oder aufgepfropfte Monomereinheiten mit Carboxyl- oder Säureanhydridgruppen. In ganz besonders bevorzugter Weise werden Copolymere aus Ethylen und höheren α-Olefinen, insbesondere Propylen, Buten-1, Hexen-1 und/oder Octen-1 verwendet, die insbesondere mit Maleinsäure gepfropft sind. Vorzugsweise beträgt der Schmelzindex dieser modifizierten Polyolefine, gemessen bei 91° C, 0,1 bis 30 g/10 Minuten, insbesondere 0,4 bis 4,0 g/10 Minuten. Die Einführung dieser Gruppen in die Olefinhomo- und copolymeren kann durch Aufpfropfen oder durch Einbau in das Grundgerüst erfolgen, beispielsweise unter Verwendung von Maleinsäureanhydrid, Acrylsäure oder Methacrylsäure als Copolymere. Es können auch Gemische dieser Homo- und copolymeren verwendet werden. Zum Pfropfen werden Maleinsäure und/oder Fumarsäure und zum Einpolymerisieren Acrylsäure und Derivate davon bevorzugt.

Handelsübliche Typen dieser Copolymeren enthalten die funktionellen Gruppen in Mengen von 0,1 bis 5,0 Gew.-%, insbesondere von 0,3 bis 3,0 Gew.-%, bezogen auf das Olefinhomo- oder copolymer. Bevorzugt eingesetzt werden Copolyolefine aus Ethylen und Propylen mit einem Propylenanteil von 15 bis 40 Gew.-%, die mit Acrylsäure oder Maleinsäureanhydrid funktionalisiert worden sind.

Die sauren Gruppen können ganz oder teilweise durch geeignete Kationen neutralisiert sein, beispielsweise mit Na⁺, Zn⁺⁺ oder dergleichen, insbesondere 0 bis 10 Gew.-% und ganz bevorzugt 0,1 bis 5 Gew.-%, bezogen auf das Mono- oder Copolyolefin.

Als modifizierte Polyolefine c) können auch Additionsprodukte von 0,5 bis 20 Gew.-% Maleinsäureanhydrid, Fumarsäure, Acrylsäure, Acrylsäureester, Vinylacetat an Homo- und Copolyolefinen verwendet werden. Die Herstellung der modifizierten Polyolefine wird in den US-Patentschriften 3 884 882 und 4 010 223 beschrieben.

Die Herstellung der erfindungsgemässen Formkörper erfolgt am zweckmässigsten durch Aufschmelzen und Homogenisieren der Komponenten in 1- oder 2 -welligen Schneckenknetern, wie sie beispielsweise von der Firma Buss (Pratteln, CH) oder Werner & Pfleiderer (Stuttgart, BRD) hergestellt werden. Es ist jedoch auch möglich, die Einzelkomponenten und ein mechanisches Gemisch der anderen Komponenten direkt durch Spritzguss oder Extrusion zu bearbeiten.

Die in den nachfolgenden Beispielen angegebenen relativen Lösungsviskositäten der Polyamide beziehen sich auf Messungen in m-Kresol oder in 97 Gew.-% Schwefelsäure unter den in DIN 53727 beschriebenen Bedingungen. Polyamid 6 und Polyamid 6/6 wurden in Schwefelsäure gemessen, Polyamid 12 in m-Kresol.

Die in den nachfolgenden Beispielen und Vergleichsbeispielen aufgeführten Formkörper wurden entweder nach Mischen der Komponenten in einem 2-Schneckenkneter ZNK 28 der Firma Werner & Pfleiderer, Stuttgart, oder aus Mischungen der Einzelkomponenten direkt im Spritzguss hergestellt. Die Prüfung der Verbundhaftung der Teilstücke an den begrenzten Berührungsflächen erfolgte an Normzugstäben gemäss DIN 53455, wobei die zu prüfenden Zugstäbe wie folgt hergestellt wurden:

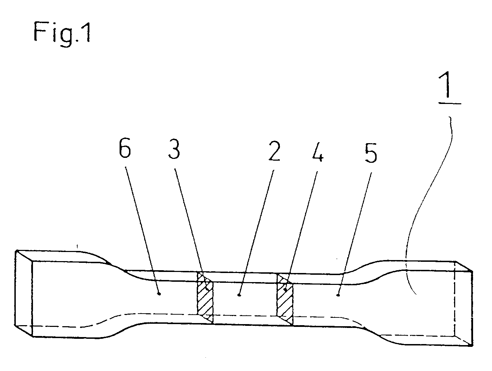

Im ersten Schritt wurden Einlegeteile gespritzt. An die Seitenflächen der erstarrten Einlegeteile wurden anschliessend die mit dem Einlegeteil zu verbindenden Polymeren oder Polymerlegierungen gespritzt. Dabei stellen in Beispiel 1 und in den Vergleichsbeispielen die Komponente b) entweder das Einlegeteil oder das angespritzte Material dar. Der Aufbau der Zugstäbe mit Einlegeteil geht aus der beigefügten Figur 1 hervor, die einen "Schulter"-Norm-Mess-stab gemäss DIN 53455 mit einem Querschnitt von 4 x 10 mm zeigt.

An diesem Schulter-Messstab (1) soll beispielhaft für die erfindungsgemässen Formkörper eine Variante erläutert werden, in der an ein Einlegeteil (2) zwei Teilstücke (5) und (6) angespritzt sind. Die Berührungsflächen (3) und (4) zwischen den zumindest teilweise unverträglichen Polymeren sind klein und begrenzt und entsprechen dem Querschnitt 4 x 10 mm.

Die Zusammensetzung und die Art der Mischung der jeweiligen Versuchskomponenten wird nachstehend beschrieben. Die jeweils eingesetzte Komponente c) ist der Tabelle 1 zu entnehmen.

### Vergleichsbeispiele

### Vergleichsbeispiel 1:

75 Gew.-% eines Polyamid 6 mit einer relativen Lösungsviskosität von 2.80 wurden mit 25 Gew.-% handelsüblicher Glasfasern in einem 2-Schneckenkneter (Typ ZSK 28 der Fa. Werner & Pfleiderer) homogenisiert und granuliert.

### Vergleichsbeispiel 2:

75 Gew.-% eines Polyamid 6/6 mit einer relativen Lösungsviskosität von 2.60 wurden mit 25 Gew.-% handelsüblicher Glasfasern in einem 2-Schneckenkneter homogenisiert und granuliert.

### Vergleichsbeispiel 3:

75 Gew.-% eines Polyamid 12 mit einer relativen Lösungsviskosität von 1.93 wurden mit 25 Gew.-% handelsüblicher Glasfasern in einem 2 -Schneckenkneter homogenisiert und granuliert.

### Beispiele

### Beispiel 1:

25 Gew.-% eines Polyamid 6 mit einer relativen Lösungsviskosität von 2,8 wurden mit 50 Gew.-% eines mit Maleinsäureanhydrid gepfropften Polypropylens und mit 25 Gew.-% handelsüblicher Glasfasern in einem 2-Schneckenkneter homogenisiert und granuliert.

### Beispiel 2:

35 Gew.-% eines Polyamid 6 mit einer relativen Lösungsviskosität von 2.8 wurden mit 40 Gew.-% eines mit Maleinsäureanhydrids gepfropften Polypropylens und mit 25 Gew.-% handelsüblicher Glasfasern in einem 2-Schneckenkneter homogenisiert und granuliert.

### Beispiel 3:

38 Gew.-% eines Polyamid 6 mit einer relativen Lösungsviskosität von 2,8 wurden mit 37 Gew.-% eines mit Maleinsäureanhydrids gepfropften Polypropylens und mit 25 Gew.-% handelsüblicher Glasfasern in einem 2 -Schneckenkneter homogenisiert und granuliert.

### Beispiel 4:

25 Gew.-% eines Polyamid 6/6 mit einer relativen Lösungsviskosität von 2,6 wurden mit 50 Gew.-% eines mit Maleinsäureanhydrids gepfropften Polypropylens und mit 25 Gew.-% handelsüblicher Glasfasern in einem 2-Schneckenkneter homogenisiert und granuliert.

### Beispiel 5:

35 Gew.-% eines Polyamid 12 mit einer relativen Lösungsviskosität von 1,95 wurden mit 40 Gew.-% eines mit Maleinsäureanhydrids gepfropften Polypropylens und mit 25 Gew.-% handelsüblicher Glasfasern in einem 2-Schneckenkneter homogenisiert und granuliert.

### Beispiel 6:

25 Gew.-% eines Polyamid 12 mit einer relativen Lösungsviskosität von 1.95 wurden mit 50 Gew.-% eines mit Maleinsäureanhydrids gepfropften Polypropylens und mit 25 Gew.-% handelsüblicher Glasfasern in einem 2-Schneckenkneter homogenisiert und granuliert.

### Beispiel 7:

50 Gew.-% eines mit 50 Gew.-% glasfaserverstärkten Polyamid 12 wurden mit 50 Gew.-% eines mit Maleinsäureanhydrids gepfropften Polypropylens mechanisch gemischt. Die Mischung wurde direkt zu Prüfkörpern verspritzt.

Santoprene 201-55 ist ein Polypropylen von EPDM-Rubber hergestellt und vertrieben von Monsanto
Kraton TC4 AAA ist ein SEBS-Copolymer
(Styren-Ethylen-Buthylen-Styren-Blockcopolymer)
hergestellt und vertrieben von Shell

**TABELLE 1**

| Einlegeteil | Aufgespritztes Material | Verbundhaftung (N) |
|---|---|---|
| Vergleichsbeispiel 1 | Santoprene 201-55 | keine |
| Vergleichsbeispiel 2 | Santoprene 201-55 | keine |
| Vergleichsbeispiel 3 | Santoprene 201-55 | keine |
| Vergleichsbeispiel 1 | Kraton TC4 AAA | keine |
| Vergleichsbeispiel 2 | Kraton TC4 AAA | keine |
| Vergleichsbeispiel 3 | Kraton TC4 AAA | keine |
| Santoprene 201-55 | Vergleichsbeispiel 1 | keine |
| Santoprene 201-55 | Vergleichsbeispiel 2 | keine |
| Santoprene 201-55 | Vergleichsbeispiel 3 | keine |
| Kraton TC4 AAA | Vergleichsbeispiel 1 | keine |
| Kraton TC4 AAA | Vergleichsbeispiel 2 | keine |
| Kraton TC4 AAA | Vergleichsbeispiel 3 | keine |
| Beispiel 1 | Santoprene 201-55 | 80 N |
| Beispiel 1 | Kraton TC4 AAA | 120 N |
| Santoprene 201-55 | Beispiel 1 | 100 N |
| Kraton TC4 AAA | Beispiel 1 | 120 N |
| Beispiel 2 | Santoprene 201-55 | 50 N |
| Beispiel 2 | Kraton TC4 AAA | 50 N |
| Beispiel 3 | Santoprene 201-55 | 50 N |
| Beispiel 3 | Kraton TC4 AAA | 50 N |
| Beispiel 4 | Santoprene 201-55 | 70 N |
| Beispiel 4 | Kraton TC4 AAA | 80 N |
| Beispiel 5 | Santoprene 201-55 | 50 N |
| Beispiel 5 | Kraton TC4 AAA | 50 N |
| Beispiel 6 | Santoprene 201-55 | 50 N |
| Beispiel 6 | Kraton TC4 AAA | 70 N |
| Beispiel 7 | Santoprene 201-55 | 40 N |
| Beispiel 7 | Kraton TC4 AAA | 50 N |

## Patentansprüche

1. Formkörper aus getrennt ausgebildeten und aus unterschiedlichen, zumindest teilweise unverträglichen Polymeren bestehenden selbständigen Körperteilen, die an einer oder mehreren begrenzten Berührungsflächen fest miteinander verbunden sind, wobei Filme und Laminate ausgeschlossen sind,
dadurch gekennzeichnet, dass die Polymeren
a) ein thermoplastisches Polymer,
b) ein damit zumindest teilweise unverträgliches thermoplastisches weiteres Polymer
sind, wobei a) und/oder b) in inniger kompatibler Mischung mit
c) 5 - 75 Gew.-% in Bezug auf diese Mischung eines durch einpolymerisierte oder aufgepfropfte Monomereinheiten mit Carboxyl- oder Säureanhydridgruppen funktionalisierten Olefinhomo- oder -copolymers
vorliegen und jedes der Polymeren bis zu 90 Gew.-% Zusatzstoffe enthalten kann.

2. Formkörper gemäss Anspruch 1, dadurch gekennzeichnet, dass das Polymer
a) mindestens ein Polyamid aus der Gruppe Homopolyamid, Copolyamid oder deren Blends,
und das weitere Polymer
b) mindestens ein Polyolefin aus der Gruppe Homopolyolefine, Copolyolefine oder deren Blends ist.

3. Formkörper nach Anspruch 2, dadurch gekennzeichnet, dass die Zusatzstoffe dem Polyamid zugemischt sind und aus Verstärkungsmitteln, Weichmachern, Schlagzähmodifikatoren, elastomeren Polyamiden, Verarbeitungshilfsmitteln und/oder Stabilisatoren bestehen.

4. Formkörper nach Anspruch 3, dadurch gekennzeichnet, dass die Verstärkungsmittel aus Glasfasern, Glaskugeln, Mineralfüllstoffen oder Kohlefasern bestehen.

5. Formkörper nach den Ansprüchen 1 bis 4, dadurch gekennzeichnet, dass die funktionalisierten Olefinhomopolymeren aus Monomeren mit 2 bis 8 Kohlenstoffatomen und die Olefincopolymeren aus mehreren dieser Monomeren mit 2 bis 8 Kohlenstoffatomen bestehen und zu 25 bis 50 Gew.-% bezogen auf das Gemisch mit dem thermoplastischen Polymer und gegebenenfalls den Additiven enthalten sind.

6. Formkörper nach Anspruch 5, dadurch gekennzeichnet, dass die Olefincopolymeren insbesondere aus Ethylen und mindestens aus einem α-Olefinen aus der Gruppe Propylen, Buten-1, Hexen-1 und Octen-1 bestehen.

7. Verfahren zur Herstellung von Formkörpern gemäss den Ansprüchen 1 bis 6, dadurch gekennzeichnet, dass die feste Verbindung der Teilstücke durch Anspritzen oder Anextrudieren erfolgt.

8. Verfahren gemäss Anspruch 7, dadurch gekennzeichnet, dass Anspritzen oder Anextrudieren eines der Polymere dass Anspritzen oder Anextrudieren eines der Polymere a) oder b) an ein erstarrtes Einlegeteil aus dem anderen Polymeren erfolgt, wobei a) und/oder b) in inniger Mischung mit c) eingesetzt werden.

9. Verfahren gemäss Anspruch 7 oder 8, dadurch gekennzeichnet, dass a) und/oder b) mit Zusatzstoffen konfektioniert eingesetzt wird.

10. Verfahren gemäss einem der Ansprüche 7 bis 9, dadurch gekennzeichnet, dass eines der Polymeren a) oder b) an ein Einlegeteil aus dem anderen Polymer angespritzt wird, wobei als Polymere Polyamid und Polyolefine verwendet werden, von denen mindestens eines mit dem funktionalisierten Copolyolefin c) innig gemischt ist.

## Claims

1. Moulded bodies of separately-formed and different, at least partially incompatible, polymers containing independent component parts which are firmly bonded together at one or more defined contact surfaces, excluding films and laminates, characterised in that the polymers are
a) a thermoplastic polymer,
b) a further thermoplastic polymer which is at least partially incompatible therewith, wherein a) and/or b) exist as an intimate, compatible mixture with
c) 5-75% by wt, based on this mixture, of an olefin homoor co-polymer functionalised with polymerised-in or grafted-on monomer units having carboxyl or acid anhydride groups,
and each of the polymers can contain up to 90% by weight of additives.

2. Moulded bodies according to claim 1, characterised in that the polymer a) is at least one polyamide selected from the group of homopolyamides, copolyamides or blends thereof, and the further polymer b) is at least one polyolefin selected from homopolyolefins, copolyolefins or blends thereof.

3. Moulded bodies according to claim 2, characterised in that the additives are mixed with the polyamide and comprise reinforcing agents, plasticisers, impact strength-modifiers, elastomeric polyamides, processing auxiliaries and/or stabilisers.

4. Moulded bodies according to claim 3, characterised in that the reinforcing agents comprise glass fibres, glass beads, mineral fillers or carbon fibres.

5. Moulded bodies according to claims 1 to 4, characterised in that the functionalised olefin homopolymers comprise monomers having 2 to 8 carbon atoms and the olefin copolymers comprise a plurality of these monomers having 2 to 8 carbon atoms, and are contained at 25 to 50% by wt, based on the mixture with the thermoplastic polymer and, if present, the additives.

6. Moulded bodies according to claim 5, characterised in that the olefin copolymers comprise in particular ethylene and at least one α-olefin selected from the group of propylene, butene-1, hexene-1 and octene-1.

7. A method for the production of moulded bodies according to claims 1 to 6, characterised in that the solid mixture of components undergoes injection moulding or coextrusion.

8. A method according to claim 7, characterised in that the injection moulding or extrusion of one of the polymers a) or b) takes place on a solidified insert part of the other polymer, wherein a) and/or b) is introduced in intimate mixture with c).

9. A method according to claim 7 or 8, characterised in that a) and/or b) is introduced pre-mixed with additives.

10. A method according to any of claims 7 to 9, characterised in that one of the polymers a) or b) is injection-moulded on an insert part of the other polymer, wherein polyamide and polyolefin are used as polymers, of which at least one is intimately mixed with the functionalised copolyolefin c).

## Revendications

1. Pièces moulées, à l'exclusion de films et de stratifiés, composées de parties constitutives distinctes, formées séparément et constituées de polymères différents, au moins partiellement incompatibles. lesquelles parties sont assemblées entre elles par une ou plusieurs surfaces de contact limitées,
caractérisées en ce que les polymères sont
a) un polymère thermoplastique,
b) un deuxième polymère thermoplastique au moins partiellement incompatible avec le premier polymère,
a) et/ou b) se trouvant sous forme d'un mélange intime et compatible avec
c) 5 - 75 % en poids, par rapport à ce mélange, d'un homopolymère ou copolymère d'oléfines fonctionnalisé par des groupes carboxyle ou anhydride d'acide, provenant de monomères copolymérisés ou introduits par coiffage,
et chacun des polymères pouvant contenir jusqu'à 90 % en poids d'adjuvants.

2. Pièces moulées conformes à la revendication 1, caractérisées en ce que le premier polymère est
a) au moins un polyamide du groupe des polyamides homopolymères ou copolymères ou de leurs mélanges,
et le deuxième polymère est
b) au moins une polyoléfine du groupe des polyoléfines homopolymères ou copolymères ou de leurs mélanges.

3. Pièces moulées conformes à la revendication 2, caractérisées en ce que les adjuvants sont mélangés au polyamide et englobent les charges de renforcement, des plastifiants, des agents modifiant la résilience au choc, des polyamides élastomères, des adjuvants de mis en oeuvre et/ou des agents stabilisants.

4. Pièces moulées conformes à la revendication 3, caractérisées en ce que les charges de renforcement englobent des fibres de verte, des billes de verte, des charges minérales ou des fibres de carbone.

5. Pièces moulées conformes aux revendications 1 à 4, caractérisées en ce que les homopolymères d'oléfines fonctionnalisés sont composés de monomères comportant de 2 à 8 atomes de carbone et les copolymères d'oléfines sont composés de plusieurs de ces monomères comportant de 2 à 8 atomes de carbone, ces homo- ou copolymères représentant de 25 à 50 % en poids du mélange avec les polymères thermoplastiques et, éventuellement, avec les adjuvants.

6. Pièces moulées conformes à la revendication 5, caractérisées en ce que les copolymères d'oléfines comportent surtout de l'éthylène et au moins une α-oléfine du groupe constitué de propylène, butène- 1, hexène- 1 et octène-1.

7. Procédé pour la préparation de pièces moulées conformes aux revendications 1 à 6, caractérisé en ce que l'assemblage solide entre les parties de la pièce se fait par surmoulage par injection ou extrusion.

8. Procédé conforme à la revendication 7, caractérisé en ce que l'on effectue le surmoulage par injection ou extrusion d'un des polymères a) ou b) sur une pièce réceptrice solide de l'autre polymère, a) et/ou b) étant utilisés sous forme d'un mélange intime avec c).

9. Procédé conforme à revendication 7 ou 8, caractérisé en ce que a) et/ou b) sont utilisés ensemble avec d'autres adjuvants.

10. Procédé conforme à une des revendications 7 à 9, caractérisé en ce que un des polymères a) ou b) est surmoulé par injection sur une pièce réceptrice de l'autre polymère, les polymères utilisés étant un polyamide et une polyoléfine et au moins un des deux étant mélangé intimement avec le copolymère d'oléfines fonctionnalisé c).
